# EUROPÄISCHE PATENTSCHRIFT

(11) **EP 2 151 067 B1**
(45) Veröffentlichungstag und Bekanntmachung des Hinweises auf die Patenterteilung: **17.08.2011**
(21) Anmeldenummer: 09732314.1
(22) Anmeldetag: 03.04.2009
(51) Int. Cl.: H04B 5/00

(54) **INDUKTIVE ÜBERTRAGUNGSVORRICHTUNG FÜR ELEKTRISCHE ENERGIE UND DATEN**
INDUCTIVE TRANSMISSION DEVICE FOR ELECTRICAL ENERGY AND DATA
DISPOSITIF DE TRANSMISSION INDUCTIVE POUR ÉNERGIE ÉLECTRIQUE ET DONNÉES

(30) Priorität: 15.04.2008 DE 102008018829
(43) Veröffentlichungstag der Anmeldung: 10.02.2010
(73) Patentinhaber: Knick Elektronische Messgeräte GmbH & Co. KG, 14163 Berlin (DE)
(72) Erfinder: BIESE, Olaf, 12167 Berlin (DE); BACHUS, Klaus, 12163 Berlin (DE); RIESE, Burkhard, 14169 Berlin (DE)
(74) Vertreter: Hübner, Gerd
(86) Internationale Anmeldenummer: PCT/EP2009/002450
(87) Internationale Veröffentlichungsnummer: WO 2009/127330

(56) Entgegenhaltungen:
- DE-A1- 19 637 964
- DE-A1- 19 642 568
- US-A- 5 741 314
- US-A1- 2005 063 488

## Beschreibung

Die Erfindung betrifft eine induktive Übertragungsvorrichtung für elektrische Energie und Daten insbesondere für einen kontaktlos arbeitenden Steckverbinder mit den im Oberbegriff des Patentanspruches 1 angegebenen Merkmalen.

Zum Hintergrund der Erfindung ist näher auf solche induktiv gekoppelte Übertragungsvorrichtungen einzugehen, die in der Praxis vornehmlich dann zum Einsatz kommen, wenn kontaktlos elektrische Signale insbesondere über kleine Distanzen übertragen werden sollen. Die Gründe hierfür können rein mechanischer Natur sein, etwa wenn gegeneinander bewegliche Teile in Steckverbindern vorliegen, zur Verhinderung von mechanischer Abnutzung bei galvanischen Kontakten, zur Gewährleistung einer ausreichenden Korrosionssicherheit usw. Es können damit aber auch elektrische Vorteile erzielt werden, wie eine inhärente Potentialtrennung, Vermeidung von undefinierten Kontaktwiderständen, Berührungsschutz etc.

In der Informationstechnik besteht nun häufig die Anforderung, über eine induktive Schnittstelle sowohl Energie als auch Daten übertragen zu können. Im Stand der Technik gibt es in diesem Zusammenhang zahlreiche Beispiele für induktiv gekoppelte Steckverbindungen, die allerdings entweder keine Schaltungsdetails zur genauen Realisierung offenbaren oder aber Schaltungen mit einem hohen Bauteilaufwand zeigen. Beispiele hierfür sind die WO 2004/047127 A1 und die DE 197 19 730 C1. Eine Einrichtung zur Übertragung von Daten und Energie ist aus der DE 196 37 964 A1 bekannt.

Der Erfindung liegt in diesem Zusammenhang die Aufgabe zugrunde, eine induktive Übertragungsvorrichtung für elektrische Energie und Daten anzugeben, die aufgrund ihrer Einfachheit und damit geringen Bauelementeanzahl insbesondere für die Integration in kompakte Steckverbindergehäuse geeignet ist. Diese Aufgabe wird durch die Kombination der im Patentanspruch 1 angegebenen Merkmale gelöst. Demnach umfasst die induktive Übertragungsvorrichtung
- eine transformatorische Anordnung mit mindestens einer Primärspule in einem primärseitigen Parallelschwingkreis und mit mindestens einer Sekundärspule in einem sekundärseitigen Parallelschwingkreis,
- einen ersten, entsprechend der Übertragungsgrundfrequenz mittels eines Ansteuerungssignals gesteuerten elektronischen Schalter zum periodischen Verbinden einer Gleichspannungsquelle mit dem primärseitigen Parallelschwingkreis zur Energieeinkopplung,
- eine zur Datenübertragung von der Primär- zur Sekundärseite dienende Bedämpfungsimpedanz, die
   = dem primärseitigen Schwingkreis zur Amplitudenmodulation durch dessen Bedämpfung zugeordnet ist, und
   = die mittels eines zweiten elektronischen Schalters abhängig von einem primärseitigen Datensignal an den Schwingkreis schaltbar ist,
- eine sekundärseitige Gleichrichterschaltung zur Energieauskopplung und Versorgung einer Last auf der Sekundärseite, sowie
- einen gegenphasig zur sekundärseitigen Gleichrichterschaltung arbeitenden, sekundärseitigen Hüllkurvendemodulator zur Demodulation des primärseitigen Datensignals auf der Sekundärseite.

In den abhängigen Ansprüchen sind bevorzugte Ausführungsformen des Erfindungsgegenstandes angegeben, deren Merkmale, Einzelheiten und Vorteile der Beschreibung der Ausführungsbeispiele entnehmbar ist. Zur Vermeidung von Wiederholungen wird darauf verwiesen.

Die erfindungsgemäßen Schaltungen bieten eine geringe Ausfallwahrscheinlichkeit durch eine geringe Bauelementeanzahl. Durch sinnvolle Ausnutzung systemimmanenter Eigenschaften induktiver Koppeleinrichtungen wird bei der erfindungemäßen Schaltungstechnik der Eigen-Energiebedarf der notwendigen elektronischen Schaltung niedrig gehalten. Durch die genannten Vorteile eignet sich die erfindungsgemäße Schaltungstechnik auch für die Verwendung in Kombination mit nicht lösbaren induktiven Koppeleinrichtungen wie Transformatoren bzw. Übertrager.

Für die Übertragung von elektrischer Energie und Daten über eine transformatorische Koppelanordnung von mindestens zwei Spulen wird eine Schaltung angegeben, die eine sichere Energie- und Datenübertragung bietet. Es sind auch Anordnungen denkbar, bei denen mehr als insgesamt zwei Spulen, z.B. zwei Spulen auf der Sekundärseite und eine Spule auf der Primärseite verwendet werden. Dies wird im folgenden aber nicht näher ausgeführt.

Im Falle eines induktiven Steckverbinders mit zwei Spulen sind diese in zwei getrennten Umhausungen untergebracht, die miteinander lösbar verbindbar sind. Beispielsweise kann es sich um eine Anordnung handeln, wie sie in der WO 2004/047127 A1 angegeben ist. Dort wird eine koaxiale Anordnung für einen Steckverbinder beschrieben, bei der eine zylindrische Primärspule innerhalb einer zylindrischen Sekundärspule platziert ist. Die erfindungsgemäße elektronische Schaltung kann aufgrund ihrer geringen Größe in der jeweiligen Umhausung der Spule mit untergebracht werden. Die Steuersignale für die einzelnen Schaltungsteile können z.B. von Mikrocontrollem erzeugt werden, die jeweils ebenfalls in der gleichen Umhausung wie die jeweilige Spule und Elektronik untergebracht sein können.

Der Mikrocontroller auf der Sekundärseite der Steckverbindung und evtl. weitere Schaltungsteile können dann zum Beispiel mit der Energie versorgt werden, die aus der induktiven Übertragung stammt.

Ausführungsbeispiele der Erfindung werden nun in der folgenden Beschreibung anhand der beigefügten Zeichnungen näher erläutert. Es zeigen:
- Fig. 1: ein Blockschaltbild einer Übertragungsvorrichtung in einer ersten Ausführungsform,
- Fig. 2: einen Schaltplan der Übertragungsvorrichtung gemäß Fig. 1,
- Fig. 3: ein Blockschaltbild einer Übertragungsvorrichtung in einer zweiten Ausführungsform,
- Fig. 4: ein Schaltbild der Übertragungsvorrichtung gemäß Fig. 3,
- Fig. 5: ein Schaltbild einer vereinfachten Übertragungsvorrichtung in einer dritten Ausführungsform,
- Fig. 6: eine Darstellung der zeitlichen Verläufe an verschiedenen Schal- tungspunkten der Schaltung gemäß Fig. 2, und
- Fig. 7: eine Darstellung der zeitlichen Verläufe an verschiedenen Schal- tungspunkten der Schaltung gemäß Fig. 4.

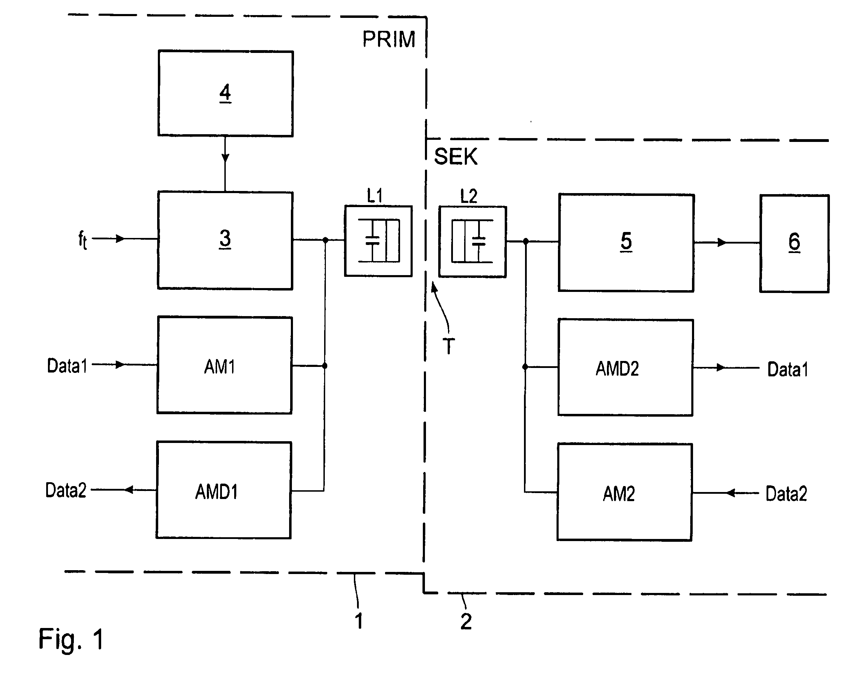

Das in Figur 1 dargestellte System enthält als zentrales Element ein als Transformator T bezeichnetes Koppelteil, welches mindestens eine Primärspule L1 und eine Sekundärspule L2 enthält. Diese sind in zwei getrennten Gehäuseteilen 1, 2 (gestrichelt angedeutet) untergebracht, die sich in Übertragungsposition in unmittelbarer räumlicher Nähe befinden, um eine magnetische Verkopplung zwischen den beiden Spulen L1, L2 zu ermöglichen. Beispielsweise können die beiden Gehäuseteile nach Art eines Steckers und einer Buchse koaxial ineinander sitzen. Natürlich sind auch andere induktive Koppelanordnungen möglich, wie zum Beispiel planare Anordnungen. Im Falle der Anwendung dieser Schaltung für nicht mechanisch lösbar miteinander verbindbare Spulen sind auch die allgemein nach dem Stand der Technik verwendeten Transformator- bzw. Übertragerbauarten möglich.

Über die transformatorische Anordnung sollen sowohl Energie in eine Richtung von der Primärseite PRIM zur Sekundärseite SEK und Datensignale in beide Richtungen, also von Primärseite PRIM zu Sekundärseite SEK und umgekehrt übertragen werden können.

Zur Realisierung dieser Anforderungen befindet sich gemäß Figur 1 auf der Primärseite PRIM ein Leistungstreiber 3, der mit Hilfe einer DC-Quelle 4 die Energiezufuhr für den Transformator T realisiert. Zu diesem Zweck wird eine Gleichspannung in eine nicht-kontinuierliche Spannung mit der Übertragungsgrundfrequenz des Steuersignals fₜ umgewandelt. Die Übertragungsgrundfrequenz des Steuersignals fₜ sollte deutlich größer sein, als die höchste Frequenz der Modulationssignale (Datensignale Data1 und Data2). Die über den Transformator T übertragene Wechselspannung wird auf der Sekundärseite SEK über eine Gleichrichterschaltung 5 gleichgerichtet und dient der Energieversorgung der sekundärseitigen Last 6.

Für die Übertragung der Datensignale wird eine Amplitudenmodulation verwendet. Auf der Primärseite gibt es dazu einen ersten Amplituden-Modulator AM1, auf der Sekundärseite einen zweiten Amplituden-Modulator AM2. Diese beiden Amplituden-Modulatoren AM1, AM2 unterscheiden sich in ihrem Aufbau und in ihrem Wirkungsprinzip voneinander. Für die Demodulation gibt es auf beiden Seiten je einen Amplituden-Demodulator AMD 1, AMD2, die beide nach dem gleichen Prinzip arbeiten.

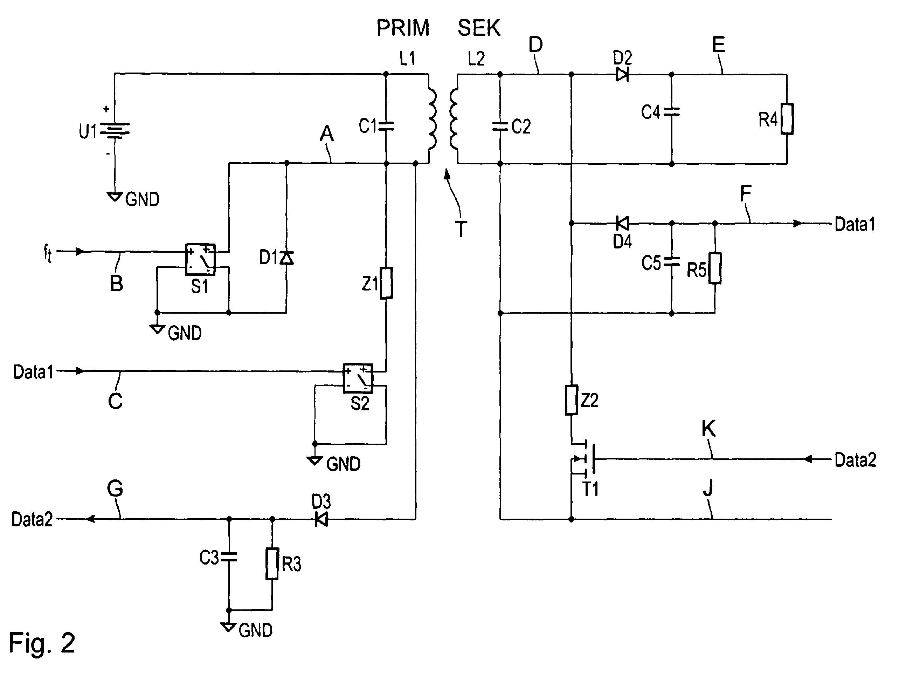

Die Energie- als auch die Datenübertragung erfolgen - wie erwähnt - über mindestens zwei Spulen L1, L2, die induktiv miteinander verkoppelt sind. Gemäß Figur 2 wird die Primärspule L1, der ein Kondensator C1 parallel geschaltet ist und die somit einen Schwingkreis bildet, periodisch mit der Übertragungsgrundfrequenz des Steuersignals f_{T} über einen elektronischen Schalter S1 mit einer Gleichspannungsquelle U1 verbunden und dadurch zyklisch mit Energie versorgt. Für den in Figur 2 dargestellten Schalter S1 gilt, dass er geöffnet ist, wenn das Steuersignal am Schaltungspunkt B = 0 ist. Der Kondensator C1 kann auch teilweise oder ganz durch die Eigenkapazität der Wicklung realisiert sein, ferner gehen auch die parasitären Kapazitäten der an L1 angeschlossenen Halbleiter mit ein. Parallel zum Schalter S1 liegt eine Diode D1, diese ist nicht zwingend erforderlich, sie kann jedoch den Wirkungsgrad verbessern. Die Diode D1 begrenzt den negativen Spannungshub am Schaltungspunkt A gegenüber GND. Der Schalter S1 kann zum Beispiel durch Halbleiter wie Dipolar- oder Feldeffekttransistoren oder andere elektronische Schalter wie z.B. Transmission Gates realisiert werden. Im Falle eines MOSFET kann die Diode D1 auch in den Schalter integriert sein.

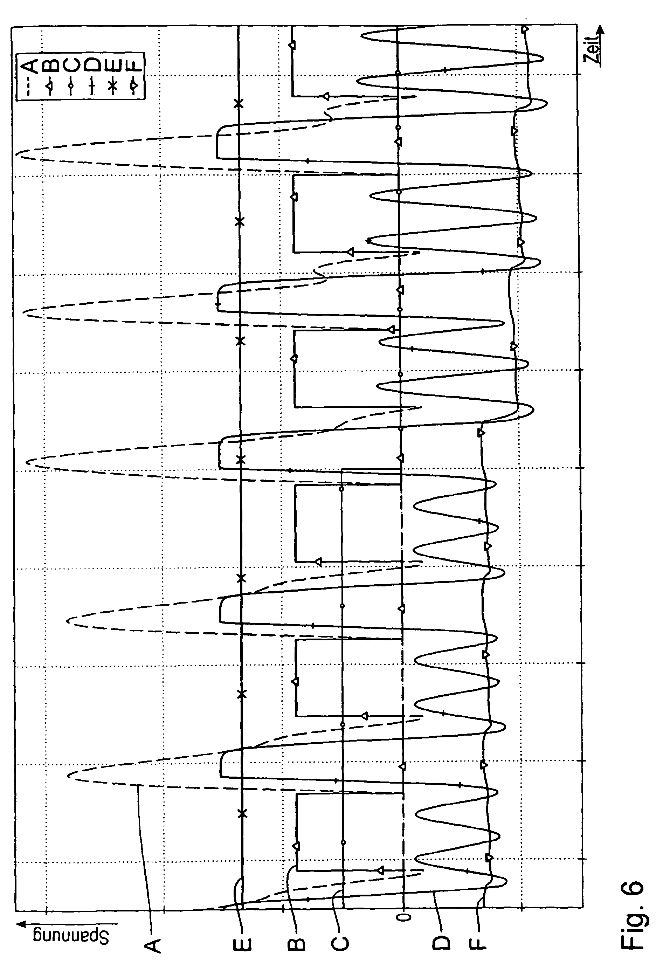

Die Sekundärspule L2 bildet zusammen mit dem parallel geschalteten Kondensator C2 ebenfalls einen Schwingkreis, wobei der Kondensator C2 auch hier teilweise oder ganz durch die Eigenkapazität der Spulenwicklung realisiert sein kann. Auch hier gehen die parasitären Kapazitäten der an L2 angeschlossenen Halbleiter ein. Die Sekundärspule L2 ist induktiv mit dem primärseitigen Schwingkreis gekoppelt und der sekundärseitige Schwingkreis wird dadurch ebenfalls mit Energie versorgt. Durch den dort vorhandenen Gleichrichter D2 mit Kondensator C4 wird die Energie im Schwingkreis als Gleichstrom zur Verfügung gestellt, um damit die sekundärseitige Last R4 mit Energie zu versorgen. Die im folgenden beschriebenen zeitlichen Signalverläufe sind in Figur 6 dargestellt. Im Falle des Vorhandenseins einer Diode D 1 bildet sich am primärseitigen Schaltungspunkt A (primärseitige Spannungen sind bezogen auf GND) beispielsweise ein Spannungsverlauf mit positiver Halbwelle mit sinusähnlicher Form immer in den Zeitabschnitten aus, in denen der Schalter S1 geöffnet ist, die negative Halbwelle wird durch die Diode D 1 in Ihrer Amplitude begrenzt. Der jeweilige Spannungsverlauf hängt natürlich von der Dimensionierung der insgesamt wirksamen Induktivitäten und Kapazitäten und der Übertragungsgrundfrequenz des Steuersignals fₜ sowie von den Lastbedingungen ab, die auf der Sekundärseite des Übertragungssystems herrschen. Am Schaltungspunkt D auf der Sekundärseite (sekundärseitige Spannungen sind bezogen auf Schaltungspunkt J) bildet sich zeitnah zur positiven Halbwelle der Spannung am Schaltungspunkt A ebenfalls eine positive Halbwelle aus, die jedoch vor dem Erreichen ihres Scheitelpunktes einen abgeflachten Abschnitt mit annähernd konstanter Amplitude aufweist. Die Halbwelle ist also im "oberen positiven Teil" durch Amplitudenbegrenzung abgeschnitten. Dies entsteht, weil die sekundärseitige Schwingkreisspannung nicht größer werden kann, als die Summe aus der momentanen Spannung am Kondensator C4 und der Flussspannung der Diode D2. In der abgeflachten Phase der sekundären Spannung am Schaltungspunkt D ist also die Diode D2 leitend und es wird dem Schwingkreis Energie für die Last R4 entnommen. In den Zeitabschnitten, die zeitnah den Zeiträumen liegen, in denen der Schalter S1 geschlossen ist, bildet sich am Schaltungspunkt D am sekundärseitigen Schwingkreis eine höherfrequente Schwingung aus, die zum größten Teil im negativen Amplitudenbereich liegt. In diesen Phasen wird dem sekundärseitigen Schwingkreis keine Energie durch den Lastkreis D2, R4 entnommen.

Der elektronische Schalter S2 ist Bestandteil des primärseitigen Modulators AM1 und dient zur Modulation der Spannungshöhe der sich an den Schaltungspunkten A und D ausbildenden Signalformen in Verbindung mit Z1. Bei dem elektronischen Schalter S2 kann es sich um Bipolar-, Feldeffekttransistoren oder auch einen MOSFET handeln, dann liegt jedoch noch eine parasitäre Diode parallel zu S2 mit Anode an GND. Auch andere elektronische Schalter wie z.B. Transmission Gates können eingesetzt werden. Für den in Figur 2 dargestellten Schalter S2 gilt, dass er geöffnet ist, wenn das Steuersignal am Schaltungspunkt C = 0 ist. Abhängig von einem Datensignal Data1 wird der aus L1 und C1 gebildete Schwingkreis bedämpft, indem eine komplexe Impedanz Z1 mit deutlichem ohmschen Anteil an den Schwingkreis geschaltet wird und dadurch ein zusätzlicher Verbraucher wirksam wird. Als komplexe Impedanz kommt beispielsweise eine Parallelschaltung aus Kondensator und Widerstand in Betracht. In der in Figur 1 gezeigten Ausführungsform wird jedoch nur ein einzelner Widerstand R1 als Impedanz Z1 verwendet. Durch diesen zuschaltbaren Verbraucher wird die Spannung im Schwingkreis bedämpft. Am Schaltungspunkt A entsteht allerdings keine große negative Spannung, sofern die Diode D1 vorhanden ist. Wie zuvor beschrieben, bildet sich am Schaltungspunkt D im sekundärseitigen Schwingkreis eine höherfrequente, abklingende Schwingung genau in den Phasen aus, in denen dem sekundärseitigen Schwingkreis keine Energie für die Last R4 entnommen wird. Diese Schwingung bildet sich durch die wirksame Streuinduktivität der Koppelanordnung der Spulen L1 und L2 in Verbindung mit den im Schwingkreis wirksamen Kapazitäten aus und wird im folgenden einfach Leerlaufschwingung genannt.

Wechselt die Steuerspannung für den Schalter S2 am Schaltungspunkt C von z.B. 0 Volt auf >>0 Volt, wobei 0 Volt dem logischen Zustand "False" und >>0 Volt dem logischen Zustand "True" entsprechen soll, so wechselt der Schalter S2 vom hochohmigen Zustand in einen niederohmigen Zustand und schaltet somit den Widerstand R1 an den primärseitigen Schwingkreis.

Bei den unmittelbar diesem Einschaltzeitpunkt nachfolgenden positiven Halbwellen ist durch die Bedämpfung des primärseitigen Schwingkreises die Amplitude am Schaltungspunkt A schlagartig herabgesetzt. Am sekundärseitigen Schaltungspunkt D wird hingegen die Amplitude der amplitudenmäßig abgeschnittenen positiven Halbwellen kaum verringert. Die Amplitude der sekundärseitigen, im negativen Spannungsbereich liegenden Leerlaufschwingung wird jedoch schlagartig verringert. Mit der durch die Bauelemente D4 und dem RC-Glied C5 und R5 auf der Sekundärseite gebildeten bekannten Hüllkurven-Demodulatorschaltung, die den negativen Amplitudenbereich der Leerlaufschwingung gleichrichtet, kann diese primärseitig erzeugte Amplitudenänderung als sprunghafte Gleichspannungsänderung am Schaltungspunkt F wiedergefunden werden. Dadurch kann das Datensignal Data1 sekundärseitig wiedergewonnen werden. Diese Ausgangsspannungsänderung kann zum Beispiel mit einem Hochpass und einem Komparator weiter ausgewertet werden. Dadurch kann das Datensignal Data 1 mit hoher Flankensteilheit aufbereitet werden.

Die Technik der Bedämpfung der Schwingkreise zum Zweck der Amplituden-Modulation ergibt einen deutlich erhöhten Modulationsgrad bei gleichem Energieaufwand gegenüber anderen Möglichkeiten der primärseitigen Amplitudenbeeinflussung. Ziel ist es, ein gut demodulierbares, amplitudenmoduliertes Signal auf der Sekundärseite SEK am Schaltungspunkt D zu erhalten, ohne dass die nutzbare sekundärseitige Spannung am Schaltungspunkt E ebenfalls stark von der Amplitudenmodulation verringert wird. Bei der bis hier beschriebenen Schaltungstopologie ist die Impedanz Z1 (bzw. R1) unabhängig von der Schalterstellung S2 immer genau dann nicht wirksam, wenn der Schalter S1 geschlossen ist. Im Gegensatz dazu wäre eine primärseitige Amplitudenmodulation auch durch einen in Reihe zur Spannungsquelle U1 liegenden Widerstand möglich, der abhängig vom Datensignal Data1 durch einen elektronischen Schalter überbrückt werden kann. Diese Anordnung hat aber gegenüber der bis hier beschriebenen erfindungsgemäßen Schaltung den Nachteil, erheblich größeren (unerwünschten) Einfluss auf die sekundärseitige Gleichspannung am Schaltungspunkt E auszuüben. Vorab wird darauf verwiesen, dass bei der Beschreibung einer vorteilhaften Weiterentwicklung des Modulationsprinzips noch kurz eine Methode umrissen wird, bei der z.B ein solcher in Serie zum Parallelschwingkreis liegender Modulationswiderstand, der durch einen elektronischen Schalter überbrückt werden kann, dennoch nutzbar wäre.

Bei den bisher gemachten Betrachtungen über das Modulationsprinzip ist die Betrachtung einer im folgenden als Modulationsentkopplung bezeichneten Eigenschaft wichtig. Darunter ist hier das Verhältnis von Änderung der Ausgangsspannung am Schaltungspunkt F des sekundärseitigen Hüllkurvenmodulators D4, C5, R5 zur Änderung der Ausgangsspannung am Schaltungspunkt E des sekundärseitigen Laststromkreises D2, C4, R4=Last bei jeweils wirksamer Amplitudenreduktion (also im Falle des Wirksam-Werdens des Modulationswiderstands R1) zu verstehen. Die Modulationsentkopplung ist also bei der erfindungsgemäßen Schaltung deutlich größer.

Eine Datenübertragung von der Sekundärseite SEK in Richtung Primärseite PRIM erfolgt ebenfalls durch Modulation der Amplitude der Schwingkreisspannung, hier ist jedoch das Modulationsprinzip ein anderes:

Indem eine komplexe Impedanz Z2 mit Hilfe des Modulationstransistors T1 in Abhängigkeit vom Datensignal Data2 (zugeführt am Schaltungspunkt K) an den sekundärseitigen Schwingkreis L2/C2 geschaltet wird, wird die Amplitude auch am Schaltungspunkt A der Primärseite beeinflusst. Die komplexe Impedanz Z2 wird bevorzugterweise durch eine Parallelschaltung aus Kondensator und Widerstand mit deutlichem kapazitiven Anteil gebildet. Dabei wird die Kapazität des Kondensators in Folge der induktiven Kopplung der Spulen L1 und L2 auch auf der Primärseite PRIM wirksam und bewirkt eine Erhöhung der wirksamen Primär-Schwingkreiskapazität. Der parallel liegende Widerstand in Z2 bewirkt einen definierteren Ladezustand des Kondensators, er ist aber nicht zwingend erforderlich.

In Folge der nun zusätzlich im Schwingkreis wirksamen Kapazität bei durchgeschaltetem Transistor T1 ist die Amplitude der positiven Halbwelle der primärseitigen Schwingung mit der Übertragungsgrundfrequenz um einen bestimmten Betrag am Schaltungspunkt A herabgesetzt, solange der Modulationstransistor T1 durchgeschaltet ist. Diese Amplitudenänderung wird vom primärseitig angeordneten Hüllkurvendemodulator AMD1, gebildet durch die Bauteile Diode D3, Kondensator C3 und Widerstand R3, erfasst und führt dort zu einer Verringerung der Ausgangsspannung am Schaltungspunkt G. Diese Ausgangsspannungsänderung repräsentiert die Dateninformation. Mit einem Hochpass und einem Komparator kann auch hier noch eine verbesserte Auswertung der Ausgangsspannungsänderung erfolgen.

An Stelle des MOSFET-Modulationstransistors T1 sind auch andere Transistortypen, wie z.B. Bipolar-Transistoren oder andere elektronische Schalter wie z.B. Transmission Gates anwendbar.

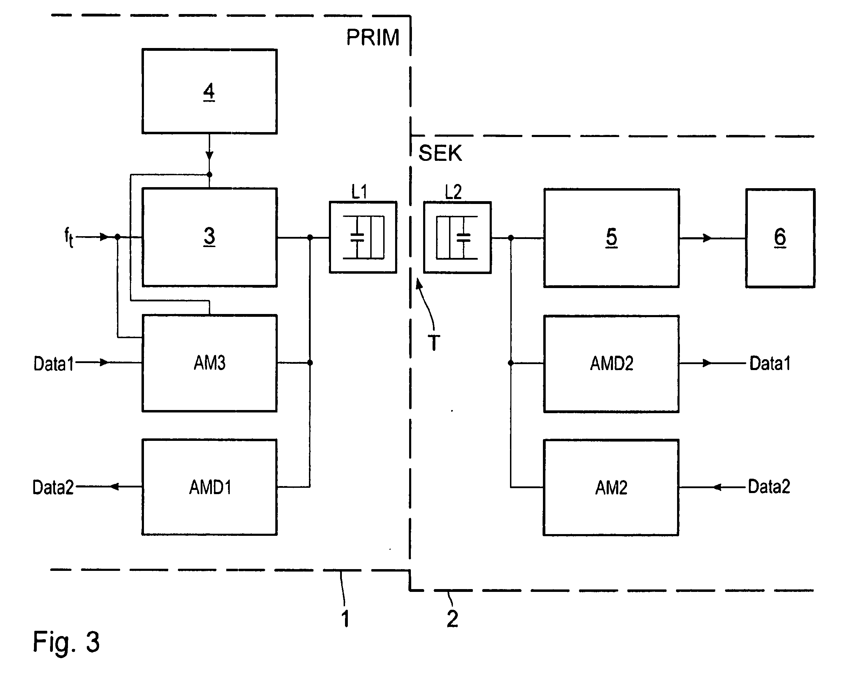

Eine vorteilhafte Weiterentwicklung bezüglich der primärseitigen Modulation ist in Figur 3 zunächst als Blockschaltbild dargestellt. Hier ist erkennbar, dass ein abweichender Amplituden-Modulator AM3 verwendet wird. Dieser Amplituden-Modulator AM3 benötigt als zusätzliches Steuersignal genau das Steuersignal f_{T} mit der Übertragungsgrundfrequenz, welches auch dem Leistungstreiber zugeführt wird. Im Gegensatz zur bisher dargelegten Anordnung erfolgt die Modulation der Spannung am Schwingkreis jetzt nur noch in bestimmten Phasen des Spannungsverlaufs am Schaltungspunkt A. Die Modulation erfolgt außerdem auch nicht mehr mit einem Modulationswiderstand R1, sondern mit einer komplexen Modulationsimpedanz Z1, die vorzugsweise aus einer Parallelschaltung aus Kondensator und Widerstand besteht. Die Dimensionierung dieser komplexen Impedanz Z1 ist anders als die Dimensionierung der komplexen Impedanz Z2.

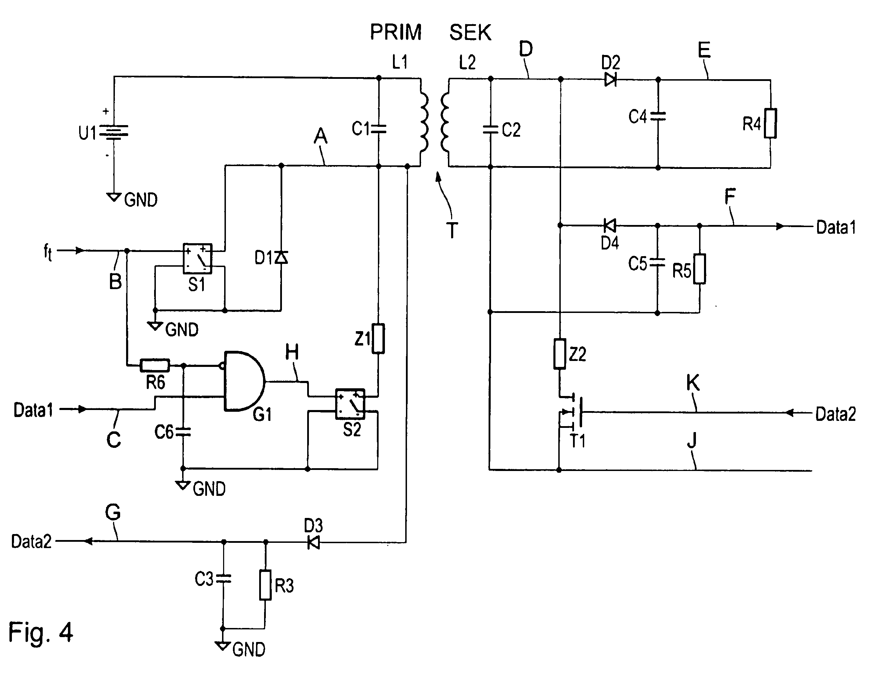

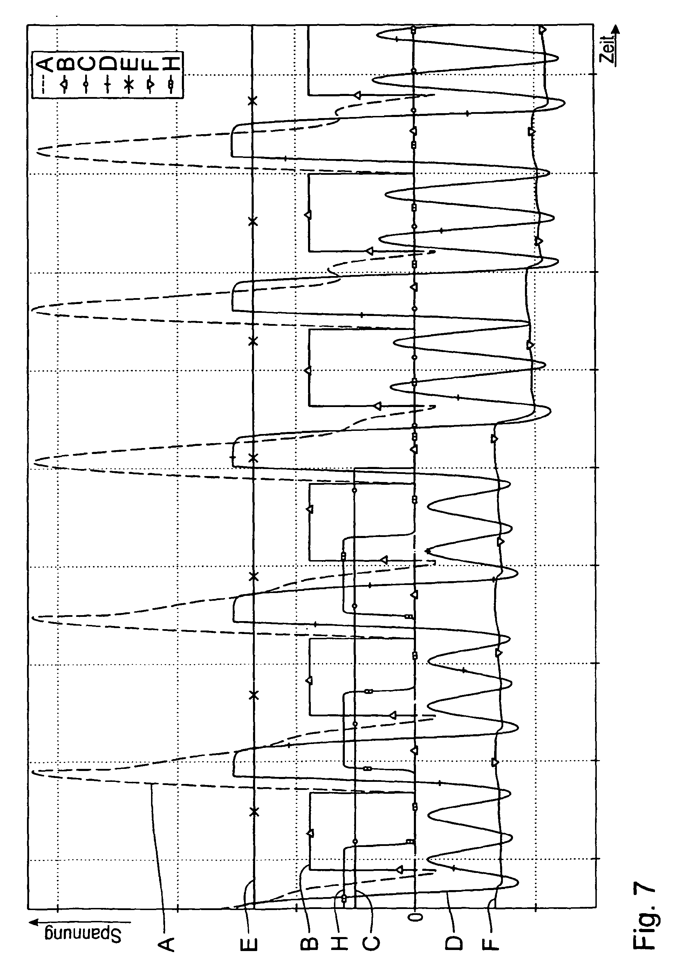

Diese Anwendung der verbesserten Modulationsschaltung hat bei gleichem Modulationsgrad einen deutlich geringeren Strombedarf zur Folge, da die Modulatorschaltung nur noch in bestimmten Teilabschnitten des primärseitigen Spannungsverlaufs den Schwingkreis mit der Impedanz Z1 belastet, wie aus der folgenden Beschreibung der Schaltung gemäß Figur 4 deutlich wird. Die im folgenden beschriebenen zeitlichen Signalverläufe der verbesserten Modulationsschaltung sind in Figur 7 dargestellt. Die Modulatorschaltung greift jetzt nur noch zu Zeitpunkten (für jeweils eine gewisse Zeitdauer) in den Amplitudenverlauf ein, in denen die Spannung am Schaltungspunkt A nahe oder gleich dem positiven Maximalwert ist, vorzugsweise zu einem Zeitpunkt, der kurz nach dem Erreichen des Scheitelpunkts liegt. Das heißt, im Gegensatz zur ursprünglichen Schaltung, bei der der Schalter S2 lediglich vom Signal Data1 gesteuert wurde, erfolgt jetzt die Steuerung dieses Schalters auch in Abhängigkeit vom Steuersignal fₜ für den Schalter S1 wie es am Schaltungspunkt B vorliegt. Dazu wirkt das Steuersignal fₜ über eine im Folgenden noch näher erläuterte Verschaltung auf den Schalter S2 ein.

Liegt nun zum Beispiel ein konstantes Datensignal Data1 in Höhe von z.B. >>0 Volt am Punkt C vor, so wird bei der ursprünglichen Schaltung gemäß Figur 2 der Schalter S2 auch durchgehend niederohmig eingeschaltet. Bei der erweiterten Schaltung nach Figur 4 hingegen, wird der Schalter S2 in diesem Fall ständig mit der Übertragungsgrundfrequenz ein- und ausgeschaltet. Dieses Ein- und Ausschalten erfolgt mit einem zum Steuersignal für S1 synchronen Steuersignal für S2. Liegt ein konstantes Datensignal Data1 in Höhe von 0 Volt vor, so bleibt der Schalter S2 dauerhaft im hochohmigen Zustand. Dieses "phasenweise Eingreifen" lässt sich mit der ursprüglichen Schaltung nach Figur 2 zum Beispiel durch ein entsprechend gestaltetes Modulationssignal für den Schalter S2 erreichen. Dieses Signal kann direkt erzeugt werden, wenn die Steuerung der beiden Schalter S 1 und S2 durch einen gemeinsamen Mikrocontroller mit entsprechenden Fähigkeiten erfolgt. Die Steuersignale für S1 und S2 müssen also einen zueinander synchronen, zeitversetzten zeitlichen Verlauf (Signale an den Schaltungspunkten B und H der Figur 4) aufweisen (wenn Data1 = True).

Solange Data1 einen logischen Zustand True repräsentiert, muss dieses Übertragungsgrundfrequenz-synchrone Schaltsignal für S2 erzeugt werden. Preiswerte Mikrocontroller sind evtl. nicht in der Lage, das Steuersignal für S2 in der dargestellten Weise zu generieren. Der Grund hierfür kann z.B. in einem nur diskret einstellbaren zeitlichen Versatz der beide Steuersignale für S1 und S2 mit evtl. nicht genügend feiner Schrittweite liegen.

Daher wird in der Schaltung gemäß Figur 4 eine andere Möglichkeit dargestellt, das Steuersignal für S2 zu erzeugen, wobei dies nur eine Ausgestaltungsmöglichkeit der erweiterten Modulatorschaltung darstellt und mehr zur Verdeutlichung des Prinzips dienen soll. Der elektronische Schalter S2 wird vom Ausgang eines UND-Gatters G1 mit zwei Eingängen angesteuert. Ein Eingang erhält das ursprüngliche Modulationssignal Data1, der andere invertierend arbeitende Eingang erhält das phasenverschobene Schaltsignal für S1. Die notwendige Phasenverschiebung wird durch die Invertierung und das passend dimensionierte RC-Glied R6/C6 zwischen dem Eingang der Übertragungsgrundfrequenz, also Schaltungspunkt B, und dem Gatter G1 erreicht.

Eine andere Möglichkeit ist die Verwendung einer invertierend arbeitenden Komparatorschaltung, die das Signal des RC-Glieds R6/C6 zu einem passenden Schaltsignal für den Schalter S2 formt. Die Verknüpfung mit dem Datensignal Data1 kann ebenfalls durch eine entsprechende Eingangsbeschaltung dieses Komparators erfolgen. Eine weitere Verfeinerung des Modulationsprinzips, wie sie im Einzelnen nicht dargestellt ist, besteht in einer elektronischen Regelschleife, die den Schaltzeitpunkt des Schalters S2 stets optimal einregelt, abhängig vom exakten zeitlichen Verlauf der Spannung am Schaltungspunkt A. Auch ist eine Herabsetzung der Frequenz der bisher mit der Übertragungsgrundfrequenz erfolgenden Ansteuerung des Schalters S2 um ganzzahlige Teilerfaktoren denkbar. Ebenso ist das für die Primärseite bis hierher dargestellte Prinzip dieser Ansteuerung des Schalters S2 auch für die sekundärseitige Modulation anwendbar.

Wie bereits erwähnt, wird der in der ursprünglichen Schaltung gemäß Figur 2 bevorzugt eingesetzte Modulationswiderstand R1 durch eine komplexe Impedanz Z1 ersetzt, die aus einer Parallelschaltung aus einem Widerstand und einem Kondensator besteht. Der Kondensator von Z1 befindet sich durch den Parallelwiderstand von Z 1 stets im entladenen oder teilweise entladenen Zustand. Z1 wird wie bereits beschrieben, bevorzugt jeweils zu den Zeiten kurz nach dem Erreichen der positiven Maximalamplitude am Schaltungspunkt A an den Schwingkreis geschaltet, was durch einen geeigneten zeitlichen Versatz des Steuersignals für den Schalter S2 erreicht wird. Durch den Aufladestrom des Kondensators wird der Schwingkreis kurzzeitig belastet, dies führt zu einem steileren Abfall der positiven Amplitude am Schaltungspunkt A. Ist der Kondensator von Z1 aufgeladen, so wird der weitere Verlauf wieder deutlich flacher. Der Widerstandsanteil von Z1 kann deutlich höher ausfallen als der Widerstandswert von R1 bei der ursprünglichen Schaltung nach Figur 2. Durch dieses erweiterte Amplitudenmodulator-Wirkungsprinzip ergibt sich ein deutlich geringerer Strombedarf als bei dem ursprünglichen Amplitudenmodulator-Wirkungsprinzip. Trotzdem besitzt die erweiterte Schaltung alle Vorteile der ursprünglichen Schaltung nach Figur 2. So wird mit der erweiterten Schaltung der gleiche Modulationsgrad und auch die gleiche Modulationsentkopplung erreicht. Das heißt, die Gleichspannung an der Last R4 (Schaltungspunkt E) ändert sich während der Modulation kaum bei trotzdem hohem Modulationsgrad auf der Sekundärseite SEK am Schaltungspunkt F. Durch das erfindungsgemäße Prinzip der zur Übertragungsgrundfrequenz synchronen Ansteuerung des Schalters S2 und der damit nur noch zeitweise wirkenden Modulationsimpedanz ist nun auch die Verwendung eines in Serie zum primärseitigen Parallelschwingkreis L1/C1 liegenden Modulationswiderstandes denkbar, welcher durch den Schalter S2 überbrückbar ist. Dies wird im einzelnen jedoch nicht näher beschrieben.

Eine vereinfachte Ausführungsform der vorstehend beschriebenen vorteilhaften Weiterentwicklung führt zu einer möglichen Einsparung von Bauteilen.

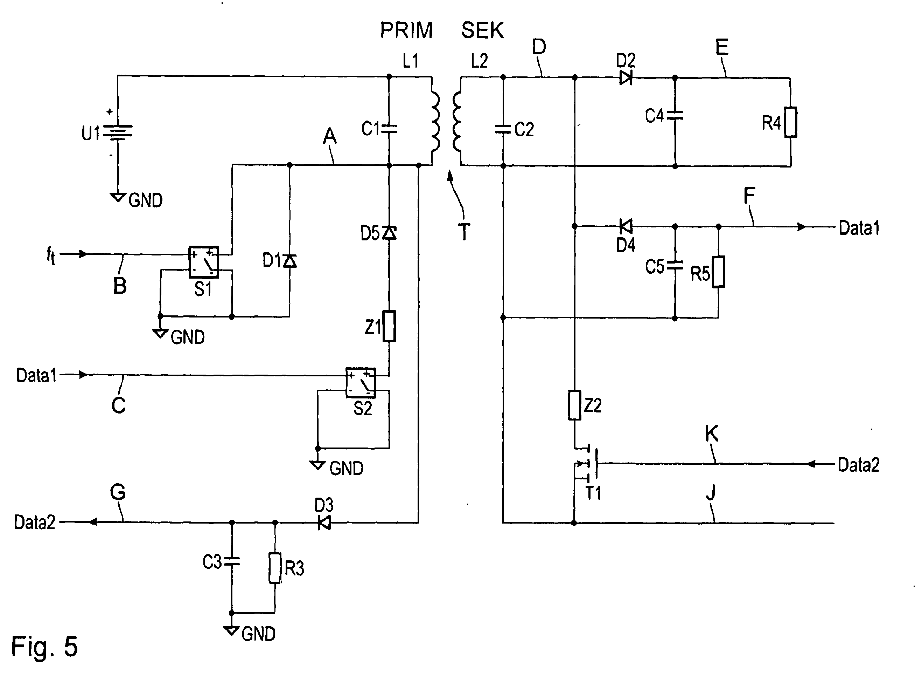

Dem erfindungsgemäßem Prinzip folgend, die primärseitige Amplitude am Schaltungspunkt A möglichst nur zu solchen Zeitpunkten zu modulieren, in denen die Amplitude nahe dem positiven Scheitelwert ist, kann durch Einfügen eines Bauelements mit spannungsabhängiger Impedanz ein ähnlicher Effekt erreicht werden. Dieses Bauelement, z.B. eine Zener-Diode, wird in Reihe zur Modulationsimpedanz Z1 geschaltet. Dieses Ausführungsbeispiel wird im Folgenden lediglich in seinen Unterschieden zu den vorher erörterten Varianten beschrieben und ist in Figur 5 dargestellt. Die dort eingefügte Zener-Diode D5 ist für positive Amplituden am Schaltungspunkt A immer dann leitfähig, wenn der Schalter S2 geschlossen ist und die Spannung an der Diode D5 im Bereich ihrer Z-Spannung liegt. Dadurch kann die Modulationsimpedanz Z1 nur zu solchen Zeitpunkten wirksam werden, bei denen die erwähnte Spannungsbedingung erfüllt ist. Eine Ansteuerung des Schalters S2 mit der Übertragungsgrundfrequenz ist hier nicht mehr erforderlich. Die Impedanz Z1 wird hier bevorzugt durch einen Widerstand gebildet, dieser Widerstand ist aber anders zu dimensionieren, als der vorher erwähnte Widerstand R1 der nicht weiterentwickelten Modulationsschaltung ganz am Anfang der Beschreibung. Auch die hier beschriebene Schaltung mit spannungsabhängigem Bauteil bewirkt eine deutliche Verringerung des Strombedarfs bei gleichzeitig hohem Modulationsgrad. Eine mögliche Erweiterung, die nicht im einzelnen beschrieben wird, ist auch hier die Anwendung einer Art Regelung oder Gegenkopplungsstruktur. Diese soll dazu führen, dass die Zener-Diode D5 (bzw. das Bauelement mit spannungsabhängiger Impedanz) unabhängig von den jeweiligen mittleren Maximalpegeln am Schaltungspunkt A zu den richtigen Zeitpunkten leitend wird. Diese Regelung oder Gegenkopplung kann erforderlich werden, wenn der mittlere Maximalpegel durch wechselnde Betriebsbedingungen starken Änderungen unterliegen würde.

## Patentansprüche

1. Induktive Übertragungsvorrichtung für elektrische Energie und Daten insbesondere für einen kontaktlos arbeitenden Steckverbinder, umfassend
- eine transformatorische Anordnung (T) mit mindestens einer Primärspule (L 1) in einem primärseitigen Parallelschwingkreis (L1/C1) und mit mindestens einer Sekundärspule (L2) in einem sekundärseitigen Parallelschwingkreis (L2/C2)
**gekennzeichnet durch**
- einen ersten, entsprechend der Übertragungsgrundfrequenz mittels eines Steuersignals (fₜ) angesteuerten elektronischen Schalter (S 1) zum periodischen Verbinden einer Gleichspannungsquelle (4) mit dem primärseitigen Parallelschwingkreis (L1/C1) zur Energieeinkopplung,
- eine zur Datenübertragung von der Primär- zur Sekundärseite (PRIM, SEK) dienende Bedämpfungsimpedanz (R1, Z1), die
= dem primärseitigen Schwingkreis (L1/C1) als Amplitudenmodulator (AM1, AM3) **durch** dessen Bedämpfung zugeordnet ist, und
= die mittels eines zweiten elektronischen Schalters (S2) abhängig von einem primärseitigen Datensignal (Data1) an den Schwingkreis (L1/C1) schaltbar ist,
- eine sekundärseitige Gleichrichterschaltung (5; D2,C4) zur Energieauskopplung und Versorgung einer Last (6, R4) auf der Sekundärseite (SEK), sowie
- einen gegenphasig zur sekundärseitigen Gleichrichterschaltung (D2,C4) arbeitenden, sekundärseitigen Demodulator (AMD 1), vorzugsweise Hüllkurvendemodulator (D4,C5,R5) zur Demodulation des primärseitigen Datensignals (Data1) auf der Sekundärseite.

2. Übertragungsvorrichtung nach Anspruch 1, **dadurch gekennzeichnet, dass** die Bedämpfungsimpedanz (R 1, Z1) außerhalb des primärseitigen Schwingkreises (L1/C1) liegt.

3. Übertragungsvorrichtung nach Anspruch 1 oder 2, **dadurch gekennzeichnet, dass** die Bedämpfungsimpedanz nur aus einem Widerstand (R1) oder als komplexe Bedämpfungsimpedanz (Z1) aus einer Parallelschaltung eines Widerstands und eines Kondensators gebildet ist.

4. Übertragungsvorrichtung nach einem der Ansprüche 1 bis 3, **gekennzeichnet durch**
- einen zur Datenübertragung von der Sekundär- zur Primärseite (PRIM, SEK) dienenden sekundärseitigen Modulator (AMD2), der einen dritten elektronischen Schalter, vorzugsweise MOSFET (T1) und eine komplexe Impedanz (Z2) aufweist, wobei mittels des dritten elektronischen Schalters (T1) die komplexe Impedanz (Z2) an dem sekundärseitigen Parallelschwingkreis (L2/C2) abhängig von einem sekundärseitigen Datensignal (Data2) schaltbar ist, und
- einen primärseitig angeordneten Demodulator (AMD 1), vorzugsweise Hüllkurvendemodulator (D3,C3,R3) zur Demodulation eines sekundärseitigen Datensignals (Data2) auf der Primärseite (PRIM).

5. Übertragungsvorrichtung nach Anspruch 4, **dadurch gekennzeichnet, dass** die Impedanz (Z2) aus der Parallelschaltung eines Widerstands und eines Kondensators gebildet ist.

6. Übertragungsvorrichtung nach einem der vorgenannten Ansprüche, **dadurch gekennzeichnet, dass** der zweite elektronische Schalter (S2) derart mit dem Ansteuerungssignal (fₜ) des ersten Schalters (S1) gekoppelt ist, dass das Zuschalten der Bedämpfungsimpedanz (R1, Z1) abhängig vom Datensignal (Data1) jeweils nur zu solchen Zeitpunkten erfolgt, in denen die Spannungsamplitude am primärseitigen Schwingkreis (L1/C1) nahe dem Maximalwert ist.

7. Übertragungsvorrichtung nach Anspruch 5 oder 6, **dadurch gekennzeichnet, dass** das Steuersignal für den zweiten elektronischen Schalter (S2) über eine Phasenverschiebungsschaltung (C6, R6) aus dem Steuersignal (fₜ) für den ersten elektronischen Schalter (S1) herleitbar ist und das phasenverschobene Signal mit dem primärseitigen Datensignal (Data1) über eine eine logische Funktion ausführende, schwellwertabhängige Schaltung verknüpft ist.

8. Übertragungsvorrichtung nach einem der vorgenannten Ansprüche, **dadurch gekennzeichnet, dass** die Steuersignale (ft; Data1) für die ersten und zweiten elektronischen Schalter **(S1, S2) auf der** Primärseite durch einen Mikrocontroller erzeugbar sind.

9. Übertragungsvorrichtung nach einem der vorgenannten Ansprüche 1 bis 5, **dadurch gekennzeichnet, dass** in Reihe zur Bedämpfungsimpedanz (Z1) ein spannungsabhängiges Bauteil liegt, welches bei geschlossenem zweiten Schalter (S2) einen Stromfluss durch die Bedämpfungsimpendanz (Z1) nur in Teilabschnitten des Spannungsverlaufs am primärseitigen Schwingkreis ermöglicht.

10. Übertragungsvorrichtung nach Anspruch 9, **dadurch gekennzeichnet, dass** das in Reihe zur Bedämpfungsimpedanz (Z1) liegende spannungsabhängige Bauteil eine Zener-Diode (D5) ist.

## Claims

1. Inductive transmission device for electrical energy and data, in particular for a contactless plug connector, the inductive transmission device comprising
- a transformer arrangement (T) comprising at least one primary coil (L1) in a parallel resonance circuit (L1/C1) on a primary side and at least one secondary coil (L2) in a parallel resonance circuit (L2/C2) on a secondary side,
**characterized by**
- a first electronic switch (S1) which is actuated in accordance with the basic transmission frequency by means of a control signal (f₁) for periodically connecting a direct voltage source (4) with the parallel resonance circuit (L1/C1) on the primary side for energy input;
- a damping impedance (R1, Z1) for data transmission from the primary to the secondary side (PRIM, SEK) which damping impedance
- is associated, in the form of an amplitude modulator (AM1, AM3), with the resonance circuit (L1/C1) on the primary side by the damping of said resonance circuit (L1/C1); and
- is switchable to the resonance circuit (L1/C1) by means of a second electronic switch (S2) depending on a data signal (Data1) on the primary side;
- a rectifier circuit (5; D2, C4) on the secondary side for energy output and supply of a load (6, R4) on the secondary side (SEK); and
- a demodulator (AMD1), preferably an envelope detector (D4, C5, R5), on the secondary side which is out of phase with the rectifier circuit (D2, C4) on the secondary side for demodulation of the data signal (Data1) from the primary side on the secondary side.

2. Transmission device according to claim 1, **characterized in that** the damping impedance (R1, Z1) is disposed outside the resonance circuit (L1/C1) on the primary side.

3. Transmission device according to claims 1 or 2, **characterized in that** the damping impedance is formed of a resistor (R1) only or as a complex damping impedance (Z 1) in the form of a parallel connection of a resistor and a capacitor.

4. Transmission device according to one of claims 1 to 3, **characterized by**
- a modulator (AMD2) for data transmission from the secondary to the primary side (PRIM, SEK) which modulator comprises a third electronic switch, preferably a MOSFET (T1), and a complex impedance (Z2), with the complex impedance (Z2) being switchable to the parallel resonance circuit (L2/C2) on the secondary side depending on a data signal (Data2) on the secondary side; and
- a demodulator (AMD1), preferably an envelope detector (D3, C3, R3), arranged on the primary side for demodulation of a data signal (Data2) from the secondary side on the primary side (PRIM).

5. Transmission device according to claim 4, **characterized in that** the impedance (Z2) is formed by the parallel connection of a resistor and a capacitor.

6. Transmission device according to one of the preceding claims, **characterized in that** the second electronic switch (S2) is coupled with the control signal (f₁) of the first switch (S1) in such a way that depending on the data signal (Data1), the damping impedance (R1, Z1) is switched on only when the voltage amplitude of the resonance circuit (L1/C1) on the primary side is close to its maximum.

7. Transmission device according to claim 5 or 6, **characterized in that** the control signal for the second electronic switch (S2) can be derived from the control signal (f₁) for the first electronic switch (S1) by means of a phase shifter circuit (C6, R6), and that the phase-shifted signal is linked with the data signal (Data1) on the primary side by means of a circuit which executes a logical function and depends on a threshold value.

8. Transmission device according to one of the preceding claims, **characterized in that** the control signals (ft; Data1) for the first and second electronic switches (S1, S2) on the primary side are generable by means of a microcontroller.

9. Transmission device according to one of the preceding claims 1 to 5, **characterized in that** a voltage-dependent component is connected in series with the damping impedance (Z1) which component allows a current to flow through the damping impedance (Z1) only in sections of the voltage path in the resonance circuit on the primary side.

10. Transmission device according to claim 9, **characterized in that** the voltage-dependent component which is connected in series with the damping impedance (Z1) is a Zener diode (D5).

## Revendications

1. Dispositif de transmission inductive pour énergie électrique et données, en particulier pour un connecteur fonctionnant sans contact, comprenant :
- un ensemble de transformateurs (T) avec au moins une bobine primaire (L1) dans un circuit résonnant parallèle du côté primaire (L1/C1) et avec au moins une bobine secondaire (L2) dans un circuit résonnant parallèle du côté secondaire (L2/C2)
**caractérisé par**
- un premier commutateur électronique (S1) commandé grâce à un signal de commande (fₜ), correspondant à la fréquence de base de transmission, pour la liaison périodique d'une source de tension continue (4) avec le circuit résonnant parallèle du côté primaire (L1/C1) pour l'injection d'énergie,
- une impédance d'amortissement (R1, Z1) servant à la transmission des données du côté primaire vers le côté secondaire (PRIM, SEC) qui
- est agencée dans le circuit résonnant du côté primaire (L1/C1) en tant que modulateur d'amplitude (AM1, AM3) pour son amortissement, et
- qui est commutable au circuit résonnant (L1/C1) par un deuxième commutateur électronique (S2) dépendant d'un signal de donnée du côté primaire (Donnée 1),
- un circuit redresseur du côté secondaire (5 ; D2, C4) pour le découplage d'énergie et l'alimentation d'une charge (6, R4) sur le côté secondaire (SEC), ainsi que par
- un démodulateur du côté secondaire (AMDI), de préférence un démodulateur de courbe d'enveloppe (D4, C5, R5), travaillant en opposition de phases par rapport au circuit redresseur du côté secondaire (D2, C4), pour la démodulation du signal de donnée du côté primaire (Donnée 1) sur le côté secondaire.

2. Dispositif de transmission selon la revendication 1 **caractérisé en ce que** l'impédance d'amortissement (R1, Z1) se situe en dehors du circuit résonnant du côté primaire (L1/C1).

3. Dispositif de transmission selon la revendication 1 ou 2 **caractérisé en ce que** l'impédance d'amortissement n'est formée que d'une résistance (R1) ou est sous forme d'une impédance d'amortissement complexe (Z1) à base d'un circuit en parallèle d'une résistance et d'un condensateur.

4. Dispositif de transmission selon l'une des revendications de 1 à 3 **caractérisé par**
- un modulateur du côté secondaire (AMD2) servant à la transmission de données du côté secondaire vers le côté primaire (PRIM, SEC), qui présente un troisième commutateur électronique, de préférence MOSFET (T1) et une impédance complexe (Z2), l'impédance complexe (Z2) étant commutable au circuit résonnant parallèle du côté secondaire (12/C2), dépendant d'un signal de données du côté secondaire (Donnée 2), grâce au troisième commutateur électronique (T1), et
- un démodulateur agencé du côté primaire (AMD1), de préférence un démodulateur de courbe d'enveloppe (D3, C3, R3) pour la démodulation d'un signal de donnée du côté secondaire (Donnée 2) sur le côté primaire (PRIM).

5. Dispositif de transmission selon la revendication 4 **caractérisé en ce que** l'impédance (Z2) est formée par le circuit en parallèle d'une résistance et d'un condensateur.

6. Dispositif de transmission selon l'une des revendications précitées **caractérisé en ce que** le deuxième commutateur électronique (S2) est couplé avec le signal de commande (fₜ) du premier commutateur (S1) de telle sorte que la mise sous tension de l'impédance d'amortissement (R1, Z1), dépendante du signal de données (Donnée 1), ne se produit qu'aux moments pour lesquels l'amplitude de la tension est proche de la valeur maximale dans le circuit résonnant du côté primaire (L1/C1).

7. Dispositif de transmission selon la revendication 5 ou 6 **caractérisé en ce que** le signal de commande pour le deuxième commutateur électronique (S2) est dérivable par un circuit de déphasage (C6, R6) du signal de commande (fₜ) pour le premier commutateur électronique (S1) et que le signal déphasé est lié avec le signal de donnée du côté primaire (Donnée 1) par une commutation exécutée par une fonction logique, dépendant d'une valeur seuil.

8. Dispositif de transmission selon l'une des revendications précitées **caractérisé en ce que** les signaux de commande (fₜ, Donnée 1) pour le premier et le second commutateurs électroniques (S1, S2) du côté primaire peuvent être générés par un microcontrôleur.

9. Dispositif de transmission selon l'une des revendications de 1 à 5 précitées **caractérisé en ce qu'**en série il y a, en plus de l'impédance d'amortissement (Z1), un élément dépendant de la tension qui, lorsque le deuxième commutateur (S2) est fermé, permet à un flux d'électricité de traverser l'impédance d'amortissement (Z1) uniquement dans des portions du circuit de tension dans le circuit résonnant du côté primaire.

10. Dispositif de transmission selon la revendication 9 **caractérisé en ce qu'**en série l'élément dépendant de la tension présent avec l'impédance d'amortissement (Z1) est une diode Zener (D5).
